# FASCICULE DE BREVET EUROPEEN

(11) **EP 2 082 206 B1**
(45) Date de publication et mention de la délivrance du brevet: **06.12.2017**
(21) Numéro de dépôt: 07858600.5
(22) Date de dépôt: 16.10.2007
(51) Int. Cl.: G01M 11/02

(54) **VISUALISATION DU POUVOIR RÉFLÉCHISSANT DE RAYONNEMENT ULTRAVIOLET D'UN VERRE DE LUNETTES**
VISUALISIERUNG DER UV-STRAHLEN-REFLEXIONSLEISTUNG EINER GLASLINSE
VISUALISATION OF THE ULTRAVIOLET RADIATION REFLECTION POWER OF A GLASSES LENS

(30) Priorité: 18.10.2006 FR 0609137
(43) Date de publication de la demande: 29.07.2009
(73) Titulaire: ESSILOR INTERNATIONAL (Compagnie Générale d'Optique), 94220 Charenton-le-Pont (FR)
(72) Inventeur: CADO, Hervé, 94220 Charenton (FR)
(74) Mandataire: Cabinet Plasseraud
(86) Numéro de dépôt international: PCT/FR2007/052174
(87) Numéro de publication internationale: WO 2008/047045

(56) Documents cités:
- EP-A1- 0 094 440
- US-A- 3 773 420
- US-A- 4 916 319
- US-A1- 2004 145 729

## Description

La présente invention concerne un procédé et un appareil de visualisation d'un pouvoir réfléchissant de rayonnement ultraviolet (UV) d'un verre de lunettes. Le procédé et l'appareil sont adaptés, en particulier, pour visualiser un tel pouvoir de réflexion lorsqu'un revêtement recouvre une face postérieure du verre.

Il est reconnu que la lumière UV, d'origine solaire ou artificielle, est néfaste pour l'oeil humain. Pour cette raison, il existe des paires de lunettes qui assurent une protection des yeux contre des rayonnements UV provenant de sources situées dans le champ de vision d'un porteur de ces lunettes. En particulier, de nombreuses paires de lunettes de protection solaire, dites lunettes antisolaires, assurent un filtrage du rayonnement UV transmis en plus d'une absorption partielle de la lumière visible. Par la suite, on entend par lumière visible de la lumière dont la longueur d'onde est située dans l'intervalle compris entre 380 nm et 780 nm (nanomètre).

Pour de telles lunettes antisolaires, il est possible de disposer sur la face postérieure des verres des revêtements antireflets vis-à-vis de la lumière visible. De tels revêtements réduisent les éblouissements et les gênes visuelles que provoquent des sources lumineuses situées en arrière du porteur des lunettes, en produisant des réflexions sur les faces postérieures des verres dans les parties latérales externes de ceux-ci.

Mais un revêtement antireflet vis-à-vis de la lumière visible présente souvent la propriété d'augmenter la réflexion d'un rayonnement UV qui correspond à des longueurs d'onde situées dans l'intervalle 320 nm - 380 nm. L'efficacité de protection des yeux contre les effets nocifs des rayonnements UV est alors réduite.

Il est alors nécessaire de comparer les aptitudes de revêtements de faces postérieures de verres de lunettes, antisolaires ou non, à peu réfléchir un rayonnement UV. Des instruments de mesures optiques existent pour cela, du type spectrophotomètre UV ou radiomètre UV par exemple, mais ils sont encombrants, d'utilisation longue et complexe, et peu illustratifs pour un futur porteur de verres de lunettes. En effet, les résultats des mesures qu'ils fournissent sont abstraits et non intelligibles pour un client qui n'est pas un spécialiste d'optique. La publication US3773420 décrit un appareil pour mesurer l'épaisseur d'une couche d'oxyde métallique sur du verre en déterminant le pouvoir réfléchissant de la couche dans le rayonnement ultraviolet. La publication US4916319 décrit un appareil pour la visualisation de rayonnement ultraviolet. Le document EP0094440 décrit un appareil pour tester la réactivité de lunettes photochromiques au rayonnement ultraviolet. Un but de la présente invention est donc de fournir un procédé de visualisation du pouvoir réfléchissant de rayonnement UV d'un verre de lunettes, qui ne présente pas les inconvénients cités ci-dessus et qui peut être mis en oeuvre de façon aisée chez un opticien.

Pour cela, l'invention propose un procédé de visualisation d'un pouvoir réfléchissant de rayonnement ultraviolet d'un verre de lunettes selon la revendication 1.

Ainsi, dans un procédé selon l'invention, la surface révélatrice convertit l'intensité du rayonnement ultraviolet qui est réfléchi par le verre de lunettes en une intensité de lumière visible, discernable à l'oeil nu. Le procédé permet donc à l'observateur d'apprécier lui-même, d'une façon démonstrative, rapide et directe, l'intensité du rayonnement UV qui est réfléchi par le verre de lunettes. Un tel procédé est donc tout particulièrement adapté pour guider le choix d'un futur porteur de verres de lunettes chez un opticien, lorsque la réflexion de rayonnement UV est l'un des critères de sélection des verres.

Le procédé peut être mis en oeuvre de sorte que la face du verre de lunettes qui est exposée au rayonnement ultraviolet primaire est une face postérieure, par rapport à un usage du verre lorsqu'il est assemblé dans une monture de lunettes. Il permet alors d'apprécier la quantité de rayonnement UV à laquelle l'oeil serait exposé par réflexion sur la face postérieure du verre dans les parties latérales externes de celui-ci.

Selon différents modes de mise en oeuvre particuliers de l'invention, la surface révélatrice peut incorporer au moins un azurant optique ou un matériau photochrome. De telles surfaces révélatrices sont des éléments simples, peu onéreux, et qui peuvent être utilisés facilement, notamment sans alimentation électrique. Dans le cas où la surface révélatrice incorpore un ou plusieurs azurants optiques, elle peut comprendre une surface de papier, de préférence blanche.

L'invention propose aussi un dispositif de visualisation du pouvoir réfléchissant de rayonnement ultraviolet d'un verre de lunettes selon la revendication 16.

Un tel dispositif de visualisation est particulièrement simple et peut être peu encombrant. Pour cette raison, il est particulièrement adapté pour être utilisé dans un magasin d'opticien, afin de permettre à un client de choisir un verre de lunettes approprié en fonction de la protection qu'il souhaite acquérir contre des rayonnements UV.

D'autres particularités et avantages de la présente invention apparaîtront dans la description ci-après d'un exemple de mise en oeuvre non limitatif, en référence aux dessins annexés, dans lesquels :
- la figure 1 est une vue de côté qui illustre le principe de visualisation du pouvoir réfléchissant de rayonnement ultraviolet d'un verre de lunettes en utilisant un procédé selon l'invention ; et
- la figure 2 représente un support adapté pour comparer les pouvoirs réfléchissants de deux verres de lunettes.

Pour raison de clarté de ces figures, les dimensions des différents éléments représentés ne sont par en proportion avec des dimensions et des rapports de dimensions réels.

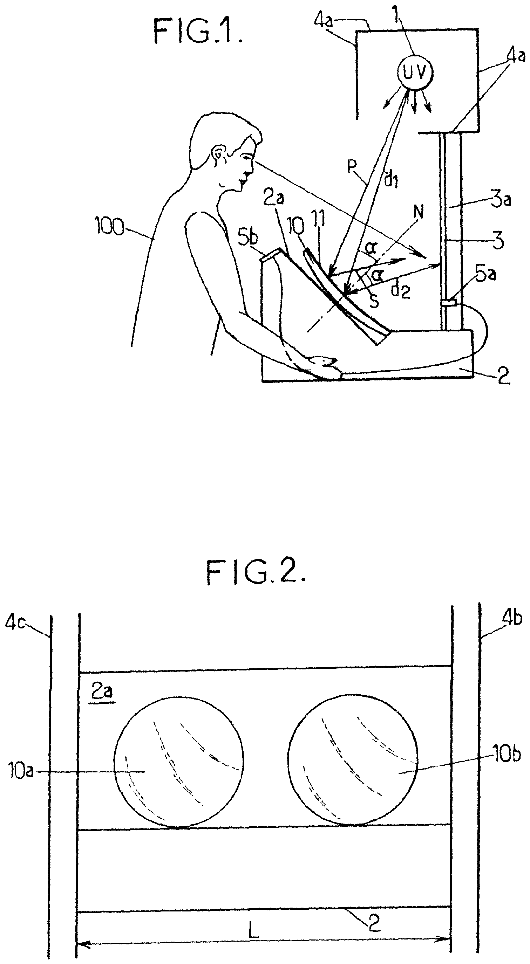

Conformément à la figure 1, un dispositif de visualisation du pouvoir réfléchissant de rayonnement UV de verres de lunettes comprend une source de rayonnement UV référencée 1, un socle 2 servant de support des verres et une surface révélatrice 3. Le dispositif présente des dimensions adaptées pour être posé sur une table ou un comptoir, à hauteur d'observation d'un utilisateur 100 en position assise, par exemple. Le socle 2 constitue la partie inférieure du dispositif et la source 1 de rayonnement UV est située dans une partie supérieure du dispositif, au dessus du socle 2. La source 1 est orientée pour produire un rayonnement UV primaire, noté P, qui est dirigé vers le socle 2. La surface révélatrice 3, qui est destinée à être observée avec attention, constitue un fond sensiblement vertical du dispositif et est située à une hauteur intermédiaire entre le socle 2 et la source 1.

La source 1 est sélectionnée de façon à produire un rayonnement UV primaire P qui est situé en partie dans un intervalle de longueur d'onde s'étendant de 320 nm (nanomètre) à 380 nm. De nombreuses sources UV appropriées sont disponibles commercialement. En particulier, des sources ayant la forme de tubes allongés sont très adaptées parce qu'elles peuvent produire un rayonnement UV sensiblement uniforme sur une largeur L du dispositif qui peut être supérieure à 25 cm. Eventuellement plusieurs tubes de ce type peuvent être disposés parallèlement les uns aux autres, de façon à produire un rayonnement UV primaire sensiblement uniforme dans toute la surface où des verres de lunettes peuvent être disposés.

Le socle 2 possède une surface de support 2a qui est adaptée pour recevoir un ou plusieurs verres de lunettes dont on cherche à apprécier le pouvoir de réflexion UV. La surface 2a est orientée approximativement à 45 degrés par rapport à une direction verticale et est exposée au rayonnement UV primaire qui est produit par la source 1. Elle est recouverte d'un matériau qui présente un pouvoir élevé d'absorption de rayonnement UV. De cette façon, un contraste important est obtenu sur la surface révélatrice 3, entre une zone de cette surface qui reçoit un rayonnement UV secondaire S produit par réflexion du rayonnement UV primaire P sur un verre 10 disposé sur la surface 2a, et une zone de la surface révélatrice 3 qui n'est pas en face du verre 10. Par exemple, la surface 2a peut être recouverte d'un morceau de feutrine noire. La figure 2 est une vue de dessus d'un socle 2 qui est adapté pour recevoir simultanément deux verres de lunettes 10a et 10b sur la surface 2a. Pour cela, la largeur L du socle 2 est supérieure à deux fois le diamètre d'une ébauche de verre de lunettes. Elle peut être, par exemple, approximativement égale à 25 cm.

La surface révélatrice 3 possède une largeur identique à celle du socle 2. Elle peut être constituée d'une feuille de papier qui contient des azurants optiques. De tels azurants sont des composés bien connus de l'Homme du métier, qui émettent une lumière visible de fluorescence lorsqu'ils sont éclairés par un rayonnement UV. La lumière visible qui est produite par ces composés est donc au moins en partie située dans l'intervalle de longueur d'onde compris entre 380 nm et 780 nm, notamment entre 380 nm et 420 nm, correspondant à une couleur bleue. De tels azurants optiques sont couramment utilisés en papeterie pour renforcer l'impression de blancheur du papier, et l'on pourra se reporter à l'un des nombreux articles publiés sur ces composés. A titre d'exemple, des composés dérivés de l'acide 4, 4'-diaminostilbène-2, 2' disulfonique peuvent être utilisés pour constituer la surface révélatrice 3. Avantageusement, la surface 3 peut être constituée d'une feuille de papier blanche, pour laquelle un halo de lumière visible produite par les azurants optiques peut être perçu nettement.

Selon un autre mode de réalisation de la surface révélatrice 3, celle-ci peut être constituée d'une couche de matériau photochrome disposée devant un fond clair référencé 3a sur la figure 1. De façon connue, un matériau photochrome présente la propriété de devenir absorbant lorsqu'il reçoit un rayonnement UV. Il peut se présenter sous forme de colorant ou de pigment incorporé dans la surface 3. La surface révélatrice 3 qui est ainsi constituée devient plus sombre à l'endroit où elle reçoit du rayonnement UV. Eventuellement, plusieurs composants de matériau photochrome peuvent être sélectionnés et mélangés pour conférer à la surface révélatrice 3, en présence de rayonnement UV, une teinte d'assombrissement qui correspond à une meilleure sensibilité visuelle d'un utilisateur du dispositif.

Le ou les azurant(s) optique(s) ou le matériau photochrome qui est incorporé dans la surface révélatrice 3 est sélectionné de sorte que cette surface 3 est sensible à un rayonnement UV qui est situé dans l'intervalle 320 nm - 380 nm, correspondant à l'intervalle spectral d'émission de la source 1.

Dans une réalisation particulièrement compacte du dispositif qui procure un bon confort d'utilisation, une distance d₁ comprise entre 10 cm et 50 cm sépare la source 1 et la surface de support 2a. Une distance d₂ comprise entre 5 cm et 20 cm sépare en outre la surface de support 2a et la surface révélatrice 3. De plus, la surface de support 2a et la surface révélatrice 3 sont disposées de sorte qu'un angle d'incidence *α* du rayonnement UV primaire P par rapport à une direction N perpendiculaire à la surface de support 2a est compris entre 30 et 45 degrés. Les mêmes caractéristiques de disposition géométrique se retrouvent approximativement par rapport au verre 10, étant donné que celui-ci est posé sur la surface de support 2a dans une position selon laquelle il est sensiblement parallèle à cette dernière.

La surface 2a du socle 2 est inclinée en direction de la surface révélatrice 3, à l'opposé de l'observateur 100. De cette façon, un rayonnement UV secondaire S qui est produit par réflexion, sur un verre 10 posé sur la surface 2a, du rayonnement UV primaire P est dirigé vers la surface 3. Le verre 10 repose sur la surface 2a par sa face opposée à celle qui est exposée au rayonnement UV primaire P. Etant donné que la surface de support 2a absorbe le rayonnement UV dans les zones de celle-ci qui ne sont pas occultées par le verre 10, l'activation de la surface révélatrice 3 correspond exclusivement à la réflexion du rayonnement UV primaire P sur la face du verre 10 opposée à la surface 2a. De cette façon, le rayonnement UV secondaire S active la surface révélatrice 3 sensiblement proportionnellement à une intensité de ce rayonnement secondaire S. Lorsque la surface 3 contient des azurants optiques, un halo lumineux visible par l'observateur 100 apparaît sur celle-ci, en ligne avec le verre 10 qui est à l'origine de la réflexion du rayonnement UV primaire P. Si la surface 3 contient un matériau photochrome, une tache sombre apparaît au même endroit. Eventuellement, il peut être avantageux de disposer des écrans absorbants 4b et 4c sur les côtés de la surface révélatrice 3, pour réduire ou supprimer un éclairement de celle-ci par un rayonnement parasite autre que le rayonnement UV secondaire S. De même, la source 1 peut être entourée d'écrans 4a, pour éviter que du rayonnement UV primaire P ne sorte en direction de l'observateur 100 ou bien ne parvienne directement sur la surface révélatrice 3.

Eventuellement, le dispositif peut comprendre en outre un instrument de mesure de l'intensité du rayonnement UV secondaire S qui est produit par réflexion sur le verre 10. Un tel appareil permet d'associer une valeur qui quantifie la réflexion du rayonnement UV par le verre 10 à la perception qualitative de l'intensité de cette réflexion qui est appréciée par l'observateur 100. Pour cela, un détecteur 5a de rayonnement UV, du type radiomètre par exemple, peut être disposé au niveau de la surface révélatrice 3, et est couplé à un afficheur 5b disposé sur une partie antérieure du socle 2, pour afficher le résultat de la mesure.

Lorsque le procédé de l'invention est utilisé pour visualiser le pouvoir réfléchissant d'une face postérieure d'un verre de lunettes 10, celui-ci est posé sur la surface 2a par sa face antérieure. La face postérieure du verre 10 est alors exposée au rayonnement UV primaire P et l'activation de la surface révélatrice 3 correspond à l'intensité de la réflexion de rayonnement UV de cette face postérieure. Il est entendu que le verre 10 peut être de tout type, notamment du type verre correcteur d'amétropie ou verre antisolaire, et peut posséder une composition quelconque, notamment minérale, organique ou mixte.

Eventuellement, la face du verre 10 dont on visualise le pouvoir réfléchissant de rayonnement UV peut être munie d'au moins un revêtement fonctionnel 11. Ce revêtement fonctionnel 11 peut comprendre, en particulier, un revêtement antireflet de lumière visible. Il peut aussi comprendre un revêtement antichoc, un revêtement antirayure, un vernis, un revêtement antistatique, un revêtement antisalissure, etc., ou une combinaison de ceux-ci. Une configuration du dispositif qui correspond à la figure 2 est alors particulièrement avantageuse, car elle permet de visualiser comparativement et simultanément les pouvoirs réfléchissants de rayonnement UV de la face d'un verre de lunettes qui est munie du revêtement fonctionnel 11 et d'une face d'un verre de référence, qui peut être dépourvue du revêtement fonctionnel. Sur la figure 2, les références 10a et 10b désignent respectivement le verre muni du revêtement fonctionnel 11 et le verre de référence, qui sont disposés l'un à côté de l'autre sur la surface 2a. La source 1 de rayonnement UV est adaptée de sorte que les deux verres 10a et 10b peuvent recevoir simultanément des parties sensiblement identiques du rayonnement UV primaire P. De plus, la surface révélatrice 3 est adaptée pour visualiser simultanément des zones séparées de celle-ci qui reçoivent des rayonnements UV secondaires distincts, produits respectivement par réflexion des parties du rayonnement UV primaire P sur les deux verres 10a et 10b. L'observateur 100 peut alors comparer les halos qui apparaissent sur la surface révélatrice 3, pour visualiser, d'une façon comparative par rapport au verre de référence 10b, l'effet du revêtement fonctionnel 11 sur la réflexion de rayonnement UV. De cette façon, il est possible de percevoir visuellement des pouvoirs réfléchissants de rayonnement UV, conférés par des revêtements 11, qui varient de quelques pourcents à plus de 25 % par exemple, et qui peuvent être répartis à peu près uniformément dans l'intervalle 320 nm - 380 nm, ou qui présentent des maxima de réflexion. Une telle visualisation est particulièrement efficace, rapide et démonstrative.

Enfin, il est bien entendu que de nombreuses adaptations du dispositif et du procédé de visualisation qui ont été décrits en détail ci-dessus peuvent être introduites, tout en conservant certains au moins des avantages de l'invention.

## Revendications

1. Procédé de visualisation d'un pouvoir réfléchissant de rayonnement ultraviolet d'un verre de lunettes (10), comprenant :
- exposer une face du verre à un rayonnement ultraviolet primaire (P), de sorte qu'un rayonnement ultraviolet secondaire (S) est produit par réflexion dudit rayonnement ultraviolet primaire sur la face du verre, ledit procédé étant **caractérisé en ce qu'**il comprend en outre :
- obtenir une surface révélatrice (3) ayant une apparence visuelle variant en fonction d'une intensité de rayonnement ultraviolet reçu par ladite surface ; et
- disposer la surface révélatrice (3) dans le rayonnement ultraviolet secondaire (S) de façon à être visible par un observateur (100),
le verre de lunettes (10) étant posé sur un support (2) absorbant de rayonnement ultraviolet, par une face dudit verre opposée à la face exposée au rayonnement ultraviolet primaire (P).

2. Procédé selon la revendication 1, suivant lequel la face du verre de lunettes (10) exposée au rayonnement ultraviolet primaire (P) est une face postérieure du verre, par rapport à un usage dudit verre assemblé dans une monture de lunettes.

3. Procédé selon la revendication 1 ou 2, suivant lequel la surface révélatrice (3) incorpore au moins un azurant optique.

4. Procédé selon la revendication 3, suivant lequel la surface révélatrice (3) comprend une surface de papier.

5. Procédé selon la revendication 1 ou 2, suivant lequel la surface révélatrice (3) incorpore un matériau photochrome.

6. Procédé selon l'une quelconque des revendications précédentes, suivant lequel le rayonnement ultraviolet primaire (P) est situé au moins en partie dans un intervalle de longueur d'onde s'étendant entre 320 nm et 380 nm, et suivant lequel la surface révélatrice (3) est sensible à un rayonnement ultraviolet situé dans ledit intervalle,

7. Procédé selon l'une quelconque des revendications précédentes, suivant lequel une distance (d₁) entre une source (1) du rayonnement ultraviolet primaire (P) et le verre de lunettes (10) est comprise entre 10 cm et 50 cm.

8. Procédé selon l'une quelconque des revendications précédentes, suivant lequel une distance (d₂) entre le verre de lunettes (10) et la surface révélatrice (3) est comprise entre 5 cm et 20 cm.

9. Procédé selon l'une quelconque des revendications précédentes, suivant lequel le verre de lunettes (10) et la surface révélatrice (3) sont disposés de sorte qu'un angle d'incidence (α) du rayonnement ultraviolet primaire (P) par rapport à une direction (N) perpendiculaire à la face du verre exposée audit rayonnement primaire est compris entre 30 et 45 degrés.

10. Procédé selon l'une quelconque des revendications précédentes, adapté pour visualiser simultanément des zones séparées de la surface révélatrice (3) recevant des rayonnements ultraviolets secondaires distincts, lesdits rayonnements ultraviolets secondaires étant produits respectivement par réflexion de parties du rayonnement ultraviolet primaire (P) sur deux verres de lunettes (10a, 10b) disposés l'un à côté de l'autre d'une même façon dans ledit rayonnement ultraviolet primaire.

11. Utilisation d'un procédé selon l'une quelconque des revendications précédentes, pour visualiser le pouvoir réfléchissant d'une face d'un verre de lunettes munie d'au moins un revêtement fonctionnel (11).

12. Utilisation selon la revendication 11, suivant laquelle on visualise comparativement le pouvoir réfléchissant de rayonnement ultraviolet de la face du verre de lunettes (10a) munie du revêtement fonctionnel (11) et un pouvoir réfléchissant de rayonnement ultraviolet d'une face d'un verre de référence (10b).

13. Dispositif de visualisation d'un pouvoir réfléchissant de rayonnement ultraviolet d'un verre de lunettes, comprenant :
- une source de rayonnement ultraviolet (1) ;
- un support (2) adapté pour supporter un verre de lunettes (10) dans un rayonnement ultraviolet primaire (P) issu de ladite source, de façon à produire un rayonnement ultraviolet secondaire (S) par réflexion dudit rayonnement ultraviolet primaire sur une face dudit verre de lunettes ; et
- une surface révélatrice (3) visible par un observateur (100) et disposée dans un champ de réflexion du rayonnement ultraviolet primaire par le verre de lunettes, de façon à recevoir le rayonnement ultraviolet secondaire, ladite surface révélatrice étant sélectionnée de sorte qu'une apparence visuelle de ladite surface révélatrice varie en fonction d'une intensité de rayonnement ultraviolet reçu par ladite surface,
dans lequel le support (2) comprend en surface un matériau absorbant de rayonnement ultraviolet.

14. Dispositif selon la revendication 13, dans lequel la source de rayonnement (1) est adaptée pour produire un rayonnement ultraviolet primaire (P) situé au moins en partie dans un intervalle de longueur d'onde s'étendant entre 320 nm et 380 nm, et dans lequel la surface révélatrice (3) est sensible à un rayonnement ultraviolet situé dans ledit intervalle.

15. Dispositif selon l'une quelconque des revendications 13 à 14, dans lequel une distance (d₁) entre la source (1) du rayonnement ultraviolet primaire (P) et le support (2) est comprise entre 10 cm et 50 cm.

16. Dispositif selon l'une quelconque des revendications 13 à 15, dans lequel une distance (d₂) entre le support (2) et la surface révélatrice (3) est comprise entre 5 cm et 20 cm.

17. Dispositif selon l'une quelconque des revendications 13 à 16, dans lequel le support (2) et la surface révélatrice (3) sont disposés de sorte qu'un angle d'incidence (a) du rayonnement ultraviolet primaire (P) par rapport à une direction perpendiculaire (N) au support est compris entre 30 et 45 degrés.

18. Dispositif selon l'une quelconque des revendications 13 à 17, dans lequel le support (2) est adapté pour recevoir l'un à côté de l'autre au moins deux verres de lunettes (10a, 10b), dans lequel la source de rayonnement ultraviolet (1) est adaptée de sorte que les deux verres peuvent recevoir simultanément des parties sensiblement identiques du rayonnement ultraviolet primaire (P), et dans lequel la surface révélatrice (3) est adaptée pour visualiser simultanément des zones séparées de ladite surface recevant des rayonnements ultraviolets secondaires (S) distincts respectivement produits par réflexion des parties du rayonnement ultraviolet primaire sur les verres de lunettes.

19. Dispositif selon l'une quelconque des revendications 13 à 18, comprenant en outre des écrans absorbants (4b, 4c) disposés sur des côtés de la surface révélatrice (3), lesdits écrans étant adaptés pour réduire ou supprimer un éclairement de la surface révélatrice par un rayonnement parasite autre que le rayonnement ultraviolet secondaire (S).

20. Dispositif selon l'une quelconque des revendications 13 à 19, comprenant en outre un instrument (5a, 5b) de mesure de l'intensité du rayonnement ultraviolet secondaire (S) produit par réflexion sur le verre de lunettes (10).

## Patentansprüche

1. Verfahren der Visualisierung eines Reflexionsvermögens eines Brillenglases (10) gegenüber ultravioletter Strahlung, umfassend:
- Exponieren einer Fläche des Glases gegenüber einer primären ultravioletten Strahlung (P), so dass eine sekundäre ultraviolette Strahlung (S) durch Reflexion der primären ultravioletten Strahlung am Brillenglas erzeugt wird, wobei das Verfahren **dadurch gekennzeichnet ist, dass** es außerdem umfasst:
- Erhalten einer Sichtbarmachungsoberfläche (3) mit einem visuellen Erscheinungsbild, das abhängig von der Intensität der ultravioletten Strahlung variiert, die von der Fläche empfangen wurde; und
- Anordnen der Sichtbarmachungsoberfläche (3) in der sekundären ultravioletten Strahlung (S), so dass sie für einen Betrachter (100) sichtbar wird,
wobei das Brillenglas (10) mit einer Fläche des Glases, die der gegenüber der primären ultravioletten Strahlung (P) exponierten Fläche entgegengesetzt ist, auf einen Träger (2) gelegt wird, der ultraviolette Strahlung absorbiert.

2. Verfahren nach Anspruch 1, demzufolge die Fläche des Brillenglases (10), die gegenüber der primären ultravioletten Strahlung (P) exponiert ist, eine hintere Fläche des Glases ist, bezogen auf einen Gebrauch des in ein Brillengestell montierten Brillenglases.

3. Verfahren nach Anspruch 1 oder 2, demzufolge die Sichtbarmachungsoberfläche (3) mindestens einen optischen Aufheller enthält.

4. Verfahren nach Anspruch 3, demzufolge die Sichtbarmachungsoberfläche (3) eine Papieroberfläche umfasst.

5. Verfahren nach Anspruch 1 oder 2, demzufolge die Sichtbarmachungsoberfläche (3) ein photochromes Material enthält.

6. Verfahren nach einem der vorhergehenden Ansprüche, demzufolge die primäre ultraviolette Strahlung (P) wenigstens teilweise in einem Wellenlängenbereich zwischen 320 mn und 380 nm liegt und demzufolge die Sichtbarmachungsoberfläche (3) gegen eine in diesem Bereich liegende ultraviolette Strahlung empfindlich ist.

7. Verfahren nach einem der vorhergehenden Ansprüche, demzufolge ein Abstand (d₁) zwischen einer Quelle (1) der primären ultravioletten Strahlung (P) und dem Brillenglas (10) zwischen 10 cm und 50 cm liegt.

8. Verfahren nach einem der vorhergehenden Ansprüche, demzufolge ein Abstand (d₂) zwischen dem Brillenglas (10) und der Sichtbarmachungsoberfläche (3) zwischen 5 cm und 20 cm liegt.

9. Verfahren nach einem der vorhergehenden Ansprüche, demzufolge das Brillenglas (10) und die Sichtbarmachungsoberfläche (3) so angeordnet sind, dass ein Einfallswinkel (α) der primären ultravioletten Strahlung (P) bezogen auf eine Richtung (N), die zu der gegenüber der primären Strahlung exponierten Fläche des Glases senkrecht verläuft, zwischen 30 und 45 Grad liegt.

10. Verfahren nach einem der vorhergehenden Ansprüche, das dafür ausgelegt ist, gleichzeitig separate Zonen der Sichtbarmachungsoberfläche (3), die unterscheidbare sekundäre ultraviolette Strahlungen empfängt, zu visualisieren, wobei die sekundären ultravioletten Strahlungen jeweils durch Reflexion von Teilen der primären ultravioletten Strahlung (P) an zwei Brillengläsern (10a, 10b), die auf gleiche Weise nebeneinander in der primären ultravioletten Strahlung angeordnet sind, erzeugt werden.

11. Anwendung eines Verfahrens nach einem der vorhergehenden Ansprüche zum Visualieren des Reflexionsvermögens einer Fläche eines Brillenglases, die mit mindestens einer Funktionsbeschichtung (11) versehen ist.

12. Anwendung nach Anspruch 11, der zufolge das Reflexionsvermögen der mit einer Funktionsbeschichtung (11) versehenen Fläche des Brillenglases (10a) gegenüber ultravioletter Strahlung und ein Reflexionsvermögen einer Fläche eines Referenzbrillenglases (10b) gegenüber ultravioletter Strahlung vergleichend visualisiert werden.

13. Visualisierungsvorrichtung für ein Reflexionsvermögen eines Brillenglases gegenüber ultravioletter Strahlung, umfassend:
- eine Quelle ultravioletter Strahlung (1);
- einen Träger (2), ausgelegt zum Tragen eines Brillenglases (10) in primärer ultravioletter Strahlung (P), die von der Quelle abgegeben wird, so dass eine sekundäre ultraviolette Strahlung (S) durch Reflexion der primären ultravioletten Strahlung an einer Fläche des Brillenglases erzeugt wird; und
- eine Sichtbarmachungsoberfläche (3), die für einen Betrachter (100) sichtbar und in einem Feld der Reflexion der primären ultravioletten Strahlung durch das Brillenglas angeordnet ist, so dass sie die sekundäre ultraviolette Strahlung empfängt, wobei die Sichtbarmachungsoberfläche so ausgewählt ist, dass ein visuelles Erscheinungsbild der Oberfläche abhängig von einer Intensität der ultravioletten Strahlung, die von der Oberfläche empfangen wird, variiert,
wobei der Träger (2) in seiner Oberfläche ein Material enthält, das ultraviolette Strahlung absorbiert.

14. Vorrichtung nach Anspruch 13, bei der die Strahlungsquelle (1) dafür ausgelegt ist, eine primäre ultraviolette Strahlung (P) zu erzeugen, die wenigstens teilweise in einem Wellenlängenbereich zwischen 320 nm und 380 nm liegt und bei der die Sichtbarmachungsoberfläche (3) gegen eine in diesem Bereich liegende ultraviolette Strahlung empfindlich ist.

15. Vorrichtung nach einem der Ansprüche 13 bis 14, bei der ein Abstand (d₁) zwischen einer Quelle (1) der primären ultravioletten Strahlung (P) und dem Träger (2) zwischen 10 cm und 50 cm liegt.

16. Vorrichtung nach einem der Ansprüche 13 bis 15, bei der ein Abstand (d₂) zwischen dem Träger (2) und der Sichtbarmachungsoberfläche (3) zwischen 5 cm und 20 cm liegt.

17. Vorrichtung nach einem der Ansprüche 13 bis 16, bei der der Träger (2) und die Sichtbarmachungsoberfläche (3) so angeordnet sind, dass ein Einfallswinkel (a) der primären ultravioletten Strahlung (P) bezogen auf eine zum Träger senkrecht verlaufende Richtung (N) zwischen 30 und 45 Grad liegt.

18. Vorrichtung nach einem der Ansprüche 13 bis 17, bei der der Träger (2) dafür ausgelegt ist, nebeneinander mindestens zwei Brillengläser (10a, 10b) aufzunehmen, bei der die Quelle der ultravioletten Strahlung (1) so ausgelegt ist, dass die zwei Gläser gleichzeitig im Wesentlichen identische Teile der primären ultravioletten Strahlung (P) empfangen können, und bei der die Sichtbarmachungsoberfläche (3) dafür ausgelegt ist, separate Zonen der Oberfläche, die unterscheidbare, jeweils durch Reflexion von Teilen der primären ultravioletten Strahlung an den Brillengläsern erzeugte sekundäre ultraviolette Strahlungen (S) empfangen, gleichzeitig zu visualisieren.

19. Vorrichtung nach einem der Ansprüche 13 bis 18, außerdem umfassend absorbierende Schirme (4b, 4c), die an den Seiten der Sichtbarmachungsoberfläche (3) angeordnet sind, wobei die Schirme dafür ausgelegt sind, eine Beleuchtung der Sichtbarmachungsoberfläche durch parasitäre Strahlung außer der sekundären ultravioletten Strahlung (S) zu reduzieren oder zu unterdrücken.

20. Vorrichtung nach einem der Ansprüche 13 bis 19, außerdem umfassend ein Instrument (5a, 5b) zur Messung der Intensität der durch Reflexion am Brillenglas (10) erzeugten sekundären ultravioletten Strahlung (S).

## Claims

1. Method for viewing an ultraviolet-reflecting power of a spectacle lens (10), comprising:
- exposing one face of the lens to a primary ultraviolet radiation (P), so that a secondary ultraviolet radiation (S) is produced by reflection of said primary ultraviolet radiation from the face of the lens, said method being **characterized in that** it furthermore comprises:
- obtaining a revealing surface (3) having a visual appearance that varies depending on an ultraviolet radiation intensity received by said surface; and
- placing the revealing surface (3) in the secondary ultraviolet radiation (S) so that it may be seen by an observer (100),
the spectacle lens (10) being placed on a holder (2) that absorbs ultraviolet radiation, via that face of said lens which is opposite the face exposed to the primary ultraviolet radiation (P).

2. Method according to Claim 1, wherein that face of the spectacle lens (10) which is exposed to the primary ultraviolet radiation (P) is a back face of the lens, with respect to a use of said lens assembled in a spectacle frame.

3. Method according to Claim 1 or 2, wherein the revealing surface (3) incorporates at least one optical whitening agent.

4. Method according to Claim 3, wherein the revealing surface (3) comprises a paper surface.

5. Method according to Claim 1 or 2, wherein the revealing surface (3) incorporates a photochromic material.

6. Method according to any one of the preceding claims, wherein the primary ultraviolet radiation (P) is at least partially located in a wavelength interval extending between 320 nm and 380 nm, and wherein the revealing surface (3) is sensitive to ultraviolet radiation located in said interval.

7. Method according to any one of the preceding claims, wherein a distance (d₁) between a source (1) of the primary ultraviolet radiation (P) and the spectacle lens (10) is comprised between 10 cm and 50 cm.

8. Method according to any one of the preceding claims, wherein a distance (d₂) between the spectacle lens (10) and the revealing surface (3) is comprised between 5 cm and 20 cm.

9. Method according to any one of the preceding claims, wherein the spectacle lens (10) and the revealing surface (3) are arranged so that an angle of incidence (α) of the primary ultraviolet radiation (P) with respect to a direction (N) perpendicular to that face of the lens which is exposed to said primary radiation is comprised between 30 and 45 degrees.

10. Method according to any one of the preceding claims, allowing separate zones of the revealing surface (3) receiving distinct ultraviolet radiative secondaries to be viewed simultaneously, said ultraviolet radiative secondaries being respectively produced by reflection of portions of the primary ultraviolet radiation (P) from two spectacle lenses (10a, 10b) that are placed one beside the other in the same way in said primary ultraviolet radiation.

11. Use of a method according to any one of the preceding claims, to view the reflecting power of a face of a spectacle lens, which face is equipped with at least one functional coating (11).

12. Use according to Claim 11, wherein the ultraviolet-reflecting power of that face of the spectacle lens (10a) which is equipped with the functional coating (11) and an ultraviolet-reflecting power of a face of a reference lens (10b) are viewed comparatively.

13. Device for viewing an ultraviolet-reflecting power of a spectacle lens, comprising:
- an ultraviolet radiation source (1);
- a holder (2) suitable for holding a spectacle lens (10) in a primary ultraviolet radiation (P) generated by said source, so as to produce a secondary ultraviolet radiation (S) by reflection of said primary ultraviolet radiation from a face of said spectacle lens; and
- a revealing surface (3) that may be seen by an observer (100) and that is placed in a field of reflection of the primary ultraviolet radiation by the spectacle lens, so as to receive the secondary ultraviolet radiation, said revealing surface being selected so that a visual appearance of said revealing surface varies depending on an ultraviolet radiation intensity received by said surface,
wherein the holder (2) comprises on its surface a material that absorbs ultraviolet radiation.

14. Device according to Claim 13, wherein the radiation source (1) is suitable for producing an primary ultraviolet radiation (P) that is at least partially located in a wavelength interval extending between 320 nm and 380 nm, and wherein the revealing surface (3) is sensitive to ultraviolet radiation located in said interval.

15. Device according to any one of Claims 13 to 14, wherein a distance (d₁) between the source (1) of the primary ultraviolet radiation (P) and the holder (2) is comprised between 10 cm and 50 cm.

16. Device according to any one of claims 13 to 15, wherein a distance (d₂) between the holder (2) and the revealing surface (3) is comprised between 5 cm and 20 cm.

17. Device according to any one of Claims 13 to 16, wherein the holder (2) and the revealing surface (3) are arranged so that an angle of incidence (a) of the primary ultraviolet radiation (P) with respect to a direction (N) perpendicular to the holder is comprised between 30 and 45 degrees.

18. Device according to any one of Claims 13 to 17, wherein the holder (2) is suitable for receiving beside one another at least two spectacle lenses (10a, 10b), wherein the ultraviolet radiation source (1) is such that the two lenses may simultaneously receive substantially identical portions of the primary ultraviolet radiation (P), and wherein the revealing surface (3) allows separate zones of said surface receiving distinct ultraviolet radiative secondaries (S) that are respectively produced by reflection of the portions of the primary ultraviolet radiation from the spectacle lenses, to be viewed simultaneously.

19. Device according to any one of Claims 13 to 18, furthermore comprising absorbing screens (4b, 4c) arranged on the sides of the revealing surface (3), said screens being suitable for decreasing or preventing illumination of the revealing surface by parasitic radiation other than the secondary ultraviolet radiation (S).

20. Device according to any one of Claims 13 to 19, furthermore comprising an instrument (5a, 5b) for measuring the intensity of the secondary ultraviolet radiation (S) produced by reflection from the spectacle lens (10).
